# EUROPÄISCHE PATENTSCHRIFT

(11) **EP 4 321 459 B1**
(45) Veröffentlichungstag und Bekanntmachung des Hinweises auf die Patenterteilung: **23.09.2026**
(21) Anmeldenummer: 23185164.3
(22) Anmeldetag: 13.07.2023
(51) Int. Cl.: B65G 47/84, B65C 9/02, B67C 3/22, B67C 7/00

(54) **BEHANDLUNGSANLAGE ZUM BEHANDELN VON BEHÄLTERN SOWIE VERFAHREN**
TREATMENT SYSTEM FOR TREATING CONTAINERS AND METHOD
INSTALLATION DE TRAITEMENT POUR LE TRAITEMENT DE RÉCIPIENTS ET PROCÉDÉ

(30) Priorität: 11.08.2022 DE 102022120284
(43) Veröffentlichungstag der Anmeldung: 14.02.2024
(73) Patentinhaber: KHS GmbH, 44143 Dortmund (DE); MFP Gesellschaft für Engineering mbH, 48683 Ahaus (DE)
(72) Erfinder: Feldhaus, Markus, 48683 Ahaus (DE)

(56) Entgegenhaltungen:
- EP-A1- 3 424 850
- DE-A1- 102010 032 573
- DE-A1- 102020 132 131
- DE-T2- 69 803 461

## Beschreibung

Die vorliegende Erfindung betrifft eine Behandlungsanlage zum Behandeln von Behältern mit einem zumindest zwei übereinander liegende Behandlungsebenen aufweisenden Behandlungskarussell, wobei jede der Behandlungsebenen eine Vielzahl von in Umfangsrichtung hintereinander angeordneten Behälteraufnahmen aufweist und zumindest in einer der Behandlungsebenen eine Behandlungseinrichtung zum Behandeln der Behälter in einem Behandlungsabschnitt angeordnet ist, wobei eine Transfereinrichtung mit einer Vielzahl von Hubelementen zum Transport der Behälter zwischen den zumindest zwei Behandlungsebenen vorgesehen ist.

Insbesondere betrifft die Erfindung Behandlungsanlagen, welche in der Getränkeindustrie eingesetzt werden. Vor diesem Hintergrund handelt es sich bei den Behältern insbesondere um Getränkebehälter, z. B. Getränkeflaschen aus Kunststoff oder aus Glas. Besonders bevorzugt sind im Rahmen der Erfindung Flaschen, welche aus Polyethylenterephthalat (PET) gebildet sind.

Behandlungsanlagen der eingangs beschriebenen Art sind grundsätzlich aus dem Stand der Technik bekannt und dienen dazu, die für die Behandlung erforderliche Transportstrecke auf mehrere, in vertikaler Richtung übereinanderliegende Behandlungsebenen aufzuteilen. Hierdurch kann in vorteilhafter Weise der zur Verfügung stehende Bauraum besonders effektiv ausgenutzt werden, während zugleich ein hoher Behälterdurchsatz ermöglicht wird.

Eine gattungsgemäße Behandlungsanlage ist beispielsweise aus der Druckschrift EP 0 998 418 B1 bekannt. Gemäß einer solchen Ausgestaltung werden die Behälter dem Behandlungskarussell in einer ersten Behandlungsebene zugeführt und sodann durch Rotation des Behandlungskarussells in Umfangsrichtung bewegt. Sodann werden die Behälter über einen Transportstern aus dem Behandlungskarussell entnommen und einer Transfereinrichtung zugeführt, welche als Transferkarussell ausgebildet ist und im Zuge der Rotation eine Hubbewegung der Behälter in vertikaler Richtung bewirkt. Durch diese Hubbewegung in vertikaler Richtung werden die Behälter auf die zweite Behandlungsebene transportiert und sodann über einen zweiten Transportstern dieser zweiten Behandlungsebene zugeführt. Zusätzlich offenbart DE 10 2020 132131 A1 eine Behandlungsanlage gemäß dem Oberbegriff des Anspruchs 1.

Die aus dem Stand der Technik bekannten Behandlungsanlagen weisen in der Regel ein schlechtes Verhältnis zwischen dem Behälterdurchsatz und der für die Anlage erforderlichen Stellfläche auf.

Der vorliegenden Erfindung liegt die Aufgabe zugrunde, eine Behandlungsanlage zur Verfügung zu stellen, welche ein verbessertes Verhältnis zwischen dem Behälterdurchsatz und der für die Anlage erforderlichen Stellfläche aufweist.

Gegenstand der Erfindung und Lösung der Aufgabe ist eine Behandlungsanlage gemäß Patentanspruch 1 sowie ein Verfahren zum Behandeln von Behältern gemäß Patentanspruch 16. Erfindungsgemäß ist vorgesehen, dass in einer Übergabestellung die Hubelemente der Transfereinrichtung jeweils unmittelbar an eine der Behälteraufnahmen angrenzen.

Hierbei definiert die Übergabestellung die Stellung, bei der eine Übergabe der Behälter zwischen einer der Behandlungsebenen und der Transfereinrichtung ermöglicht wird. Da die Hubelemente unmittelbar an die Behälteraufnahmen angrenzen kann der zur Verfügung stehende Bauraum sehr effektiv ausgenutzt werden.

Im Rahmen der Erfindung sind grundsätzlich mehrere Ausgestaltungsformen der Transfereinrichtung möglich, wobei gemäß einer ersten Ausgestaltungsform die Transfereinrichtung zumindest ein Transferkarussell aufweist, wobei zumindest ein Teil der Hubelemente, vorzugsweise aber sämtliche Hubelemente, an dem Transferkarussell angeordnet ist und wobei das Transferkarussell und das Behandlungskarussell nebeneinander mit parallel zueinander versetzten Drehachsen angeordnet sind. Entsprechend werden die Behälter aus der ersten Behandlungsebene des Behandlungskarussells heraus und in das Transferkarussell hinein geführt. Innerhalb des Transferkarussells werden dann die in den Hubelementen angeordneten Behälter auf Höhe der zweiten Behandlungsebene bewegt und sodann der zweiten Behandlungsebene zugeführt. Entsprechend bildet das Transferkarussell einen ersten Transferabschnitt, über welchen der erste und der zweite Transportabschnitt miteinander verbunden werden. Die Überführung der Behälter aus dem Transferkarussell in die zweite Behandlungsebene kann beispielsweise ebenfalls unmittelbar erfolgen, so dass dann in einer weiteren Übergabestellung die Hubelemente der Transfereinrichtung unmittelbar an die Behälteraufnahmen der zweiten Behandlungsebene angrenzen.

Denkbar ist darüber hinaus auch eine Transportsternanordnung zwischen dem Transferkarussell und der zweiten Behandlungsebene. Die Transportsternanordnung weist dann bevorzugt zumindest zwei Transportsterne auf, damit sichergestellt werden kann, dass die Behandlungsebenen in dieselbe Richtung rotieren. Innerhalb der Transportsterne wird ausschließlich eine Bewegung der Behälter in Umfangsrichtung nicht aber in einer Hubrichtung bewirkt.

Um einen größeren Behälterdurchsatz ermöglichen zu können, ist es im Rahmen der ersten Ausgestaltungsform auch möglich, dass die Transfereinrichtung zumindest zwei Transferkarusselle aufweist, wobei die Hubelemente an den Transferkarussellen angeordnet sind und wobei die Hubelemente in einer Übergabestellung an unterschiedliche Behandlungsebenen des Behandlungskarussells angrenzen. Entsprechend ist ein erstes Transferkarussell vorgesehen, dessen Hubelemente in einer Übergabestellung an die Behälteraufnahmen der ersten Behandlungsebene und ein zweites Transferkarussell, dessen Hubelemente an die Behälteraufnahmen in der zweiten Behandlungsebene anschließen. Somit wird die erforderliche Hubbewegung zwischen den beiden Behandlungsebenen auf die beiden Transferkarusselle aufgeteilt, sodass entsprechend jedes Transferkarussell lediglich eine Hubbewegung über einen gewissen Abschnitt der erforderlichen Hubstrecke bewirkt. Hierbei kann die Übergabe der Behälter zwischen den beiden Transferkarussellen in unmittelbarer Art und Weise erfolgen, sodass die beiden Transferkarusselle im Transferabschnitt unmittelbar aneinander angrenzen. Vorzugsweise ist aber ein Transportstern vorgesehen, welcher entweder zwischen den beiden Transferkarussellen oder aber zumindest zwischen einem der Transferkarusselle und der zugeordneten Behandlungsebene angeordnet ist. Durch die Einbindung von drei rotierenden Komponenten wird sichergestellt, dass die Behandlungsebenen in die gleiche Richtung rotieren können.

Eine Ausgestaltung mit zwei Transferkarussellen innerhalb einer Transfereinrichtung erfordert zwar einen größeren Bauraum bzw. Stellplatz. Allerdings kann ein wesentlich größerer Behälterdurchsatz ermöglicht werden, da in den Transferkarussellen jeweils lediglich ein geringer Hub bewirkt werden muss. Das Verhältnis zwischen dem Behälterdurchsatz und den hierfür erforderlichen Stellplatz kann daher im Vergleich zu den aus dem Stand der Technik bekannten Behandlungsanordnungen optimiert wird.

Gemäß einer bevorzugten Ausgestaltung können die Transferkarusselle auch stationäre Transportelemente aufweisen, welche oberhalb oder unterhalb der Hubelemente angeordnet sind. Über diese Transportelemente kann dann ein Behälterzulauf oder Behälterablauf für das Behandlungskarussell ermöglicht werden. Sofern beispielsweise zwei Transferkarusselle vorgesehen sind, kann das erste Transferkarussell beispielsweise Transportelemente unterhalb der Hubelemente und das zweite Transferkarussell Hubelemente oberhalb der Hubelemente aufweisen. Je nach Laufrichtung der Behälter bildet demnach eines der Transferkarusselle einen Behälterzulauf und das jeweils andere Transferkarussell einen Behälterablauf für das Behandlungskarussell. Bei einer Ausgestaltung mit nur einem Transferkarussell kann entsprechend ein separater Behälterzulauf oder Behälterablauf vorgesehen sein, welcher beispielsweise als Transportstern ausgebildet sein kann.

Gemäß einer alternativen zweiten Ausgestaltungsform sind die Hubelemente an dem Behandlungskarussell entlang des Umfangs angeordnet. Entsprechend umschließt die Transfereinrichtung das Behandlungskarussell, sodass die Transfereinrichtung und das Behandlungskarussell koaxial zueinander angeordnet sind. Die Besonderheit ist hierbei im Unterschied gegenüber der ersten Ausgestaltungsform, dass die Behälter zwar weiterhin für die Bewegung zwischen zwei Behandlungsebenen aus dem Behandlungskarussell herausgeführt werden. Allerdings ist hierfür lediglich eine geringfügige radiale Bewegung erforderlich, welche keinen großen zusätzlichen Bauraum erfordert.

Gemäß einer solchen Ausgestaltung macht sich die Erfindung den Vorteil zunutze, dass die Behälteraufnahmen in den Behandlungsebenen in einer Draufsicht fluchtend zueinander angeordnet sind. Dies bedeutet, dass die Behälteraufnahmen stets auf demselben Radius und mit derselben Winkelteilung entlang des Umfangs der Behandlungsebene angeordnet sind. Entsprechend kann jeweils ein Hubelement einer Behälteraufnahme einer ersten und zumindest einer zweiten Behandlungsebene zugeordnet sein. Für eine Überführung der Behälter zwischen den einzelnen Behandlungsebenen ist dann eine vertikale Bewegung parallel zur Drehachse ausreichend. Eine zusätzliche während der Hubbewegung verlaufende radiale Bewegung oder Umfangsbewegung ist nicht erforderlich. Entsprechend sind die Hubelemente bezüglich einer radialen Bewegung und einer Umfangsbewegung festgelegt.

Im Unterschied zu der ersten Ausgestaltungsform ist eine entsprechend große Anzahl von Hubelementen erforderlich, wobei sich die Anzahl der Hubelemente nach der Anzahl der Behälteraufnahmen in einer Behandlungsebene orientiert. Im Gegensatz dazu ist die Anzahl der Hubelemente bei der ersten Ausgestaltungsform unabhängig von der konkreten Anzahl der Behälteraufnahmen und richtet sich vielmehr nach der Anzahl der Transferkarusselle, dem Durchmesser der Transferkarusselle und nach dem für die Hubbewegung erforderlichen Zeitintervall.

Um die Behälter insbesondere bei der zweiten Ausgestaltungsform zwischen den Hubelementen und den Behälteraufnahmen bewegen zu können, sind bevorzugt in der Übergabestellung entsprechende Abstreifelemente vorgesehen, welche im Zuge der Rotation der Behandlungsebenen eine geringfügige Umlenkung der Behälter in radialer Richtung bewirken. So können die Behälter z. B. ausgehend von der ersten Behandlungsebene über ein erstes Abstreifelement radial nach außen in die Hubelemente bewegt werden. Sodann erfolgt im Zuge der Rotation des Behandlungskarussells eine Hubbewegung der Hubelemente in Richtung der zweiten Behandlungsebene. Nach Erreichen dieser zweiten Behandlungsebene bewirkt dann ein zweites Abstreifelement eine Bewegung der Behälter radial nach innen in die Behälteraufnahmen der zweiten Behandlungsebene. Auch hier kann die Transportrichtung grundsätzlich umgekehrt werden, sodass dann entsprechend ausgehend von der zweiten Behandlungsebene eine Bewegung der Behälter in die Transfereinrichtung und sodann in die erste Behandlungsebene bewirkt wird.

Unabhängig von der konkreten Ausgestaltungsform weist die Transfereinrichtung eine Hubeinrichtung auf, welche dazu eingerichtet ist, die Hubelemente in Hubrichtung zu bewegen. Hierbei ist es zwingend erforderlich, dass die Geschwindigkeit der Hubelemente an die Rotationsgeschwindigkeit des Behandlungskarussells und gegebenenfalls des Transferkarussells bzw. der Transferkarusselle angepasst ist, damit sichergestellt werden kann, dass stets in einer Übergabestellung die Hubelemente unmittelbar an die Behälteraufnahmen angrenzen. Dies lässt sich grundsätzlich durch eine elektronische Steuerung realisieren, wobei sich im Rahmen der Erfindung eine Ausgestaltung als besonders vorteilhaft erwiesen hat, bei der die Hubeinrichtung eine Kurvensteuerung aufweist.

Bei einer Kurvensteuerung wird die Bewegung der Hubelemente allein durch die Rotation der Hubelemente an dem Behandlungskarussell oder dem Transferkarussell bewirkt. Hierzu weisen die Hubelemente jeweils eine Führungsrolle auf, welche entlang einer Führungskurve abrollen. Diese Führungskurve ist entsprechend in einer Draufsicht ringförmig ausgebildet und weist darüber hinaus eine sich variierende Erstreckung in vertikaler Richtung auf. Sofern also die Führungskurve in vertikaler Richtung ansteigt, werden auch die Führungsrollen und die daran anschließenden Hubelemente in vertikaler Richtung nach oben bewegt, sodass allein die Rotation des entsprechenden Behandlungskarussells oder des Transferkarussells eine Bewegung in vertikaler Richtung ermöglichen. Durch Abfall der Führungskurve können dann die Hubelemente wieder zurück nach unten geführt werden. Eine solche Ausgestaltung hat den Vorteil, dass die Bewegung der Hubelemente und die Rotation des Transferkarussells bzw. der Transferkarusselle allein aus mechanischer Hinsicht miteinander zwangssynchronisiert sind. Fehlzuordnungen der Behälteraufnahmen mit den Hubelementen können hierdurch wirksam verhindert werden.

Unabhängig von der konkreten Ausgestaltung werden die Behälter demnach innerhalb der jeweiligen Behandlungsebene lediglich über einen gewissen Winkelbereich geführt, sodass sich der entsprechende Abschnitt der Transportstrecke nicht über den gesamten Umfang der Behandlungsebene erstreckt. Ausgehend von der ersten Ausgestaltungsform definiert sich der entsprechende Abschnitt der Transportstrecke aus dem Umfangsabschnitt zwischen dem Einlauf und dem Auslauf in der entsprechenden Behandlungsebene. Je nach Behandlungsebene kann dann der Behältereinlauf und/oder Behälterauslauf über die entsprechende Transfereinrichtung definiert werden. Ausgehend von der zweiten Ausgestaltungsform endet der Abschnitt der Transportstrecke an der Übergabestellung, an der die Behälter in die Transfereinrichtung überführt bzw. aus der Transfereinrichtung in die entsprechende Behandlungsebene zurückgeführt werden. Bevorzugt erstrecken sich die Abschnitte der Transportstrecke in den jeweiligen Behandlungsebenen zwischen 180° und 340°, besonders bevorzugt zwischen 200° und 270°.

Gemäß einer besonders bevorzugten Ausgestaltungsform weist das Behandlungskarussell zumindest drei übereinanderliegende Behandlungsebenen auf, wobei die Transfereinrichtung dazu eingerichtet ist, die Behälter zwischen einer ersten und einer zweiten und zwischen der zweiten und einer dritten Behandlungsebene zu bewegen. Hierbei wird von eine Ausgestaltung ausgegangen, bei der die zweite Behandlungsebene zwischen der ersten und dritten Behandlungsebene angeordnet ist und wobei sich die dritte Behandlungsebene hinsichtlich ihrer Ausgestaltung nicht von der ersten und der zweiten Behandlungsebene unterscheidet. Grundsätzlich ist die Erfindung auch nicht auf lediglich drei Behandlungsebenen beschränkt, sodass beispielsweise auch eine vierte, fünfte, sechste oder auch mehr Behandlungsebenen vorgesehen sein können, welche entsprechend übereinander ausgebildet sind.

Bevorzugt weisen die Hubelemente bei einer Ausgestaltung mit zumindest drei Behandlungsebenen jeweils zumindest zwei übereinanderliegende Transportaufnahmen für die Behälter auf. Unter einer Transportaufnahme werden im Rahmen der Erfindung Aufnahmen für die Behälter bezeichnet, welche an den Hubelementen angeordnet sind. Die Ausgestaltung der Transportaufnahmen und der Behälteraufnahmen des Behandlungskarussells können grundsätzlich hinsichtlich ihrer konstruktiven Ausgestaltung miteinander übereinstimmen. Bevorzugt ist eine Ausgestaltung als sogenannter Neckring-Halter, wobei dann die zu behandelnden Behälter als Getränkeflaschen, insbesondere als Getränkeflaschen aus Kunststoff, ausgebildet sind. Derartige Getränkeflaschen weisen einen sogenannten Neckring in einem Kopfbereich unterhalb des Außengewindes auf, wobei das Außengewinde dazu dient, eine Verschlusskappe aufschrauben zu können. Dieser Neckring steht gegenüber dem Außendurchmesser vor, sodass die Behälter in einfacher Art und Weise über diesen Neckring an den Transportaufnahmen angeordnet, insbesondere hängend angeordnet, werden können.

Sofern zumindest drei Behandlungsebenen vorgesehen sind, können zumindest zwei solcher Transportelemente übereinander an nur einem Hubelement angeordnet sein, sodass im Zuge einer Hubbewegung ein Behälter zwischen der ersten und der zweiten Behandlungsebene und ein weiterer Behälter zwischen der zweiten und der dritten Behandlungsebene bewegt werden kann.

Bevorzugt ist es, wenn in mehreren der Behandlungsebenen, insbesondere in jeder der Behandlungsebenen, eine Behandlungseinrichtung zum Behandeln der Behälter in jeweils einem Behandlungsabschnitt angeordnet ist. Besonders bevorzugt unterscheiden sich die Behandlungseinrichtungen in der Art der Behandlung voneinander. Entsprechend kann für jede der Behandlungsebenen eine andere Art der Behandlung vorgesehen sein, sodass sich beispielsweise der erste Behandlungsabschnitt innerhalb des ersten Abschnitts der Transportstrecke und der zweite Behandlungsabschnitt innerhalb des zweiten Abschnittes der Transportstrecke erstreckt. Grundsätzlich ist es aber auch möglich, dass insbesondere bei mehr als zwei Behandlungsebenen, in einzelnen Behandlungsebenen lediglich ein Transport erfolgt und demnach keine aktive Behandlung mit einer Behandlungseinrichtungen. Darüber hinaus können auch zumindest zwei der Behandlungseinrichtungen zur Durchführung der gleichen Art von Behandlung eingerichtet sein.

Grundsätzlich sind mit einer Behandlung der Behälter sämtliche Tätigkeiten gemeint, welche in irgendeiner Form die Behälter physikalisch beeinflussen. Hierbei kann es sich beispielsweise um die optische Ausgestaltung der Behälter handeln. Entsprechend kann dann zumindest eine der Behandlungseinrichtungen eine Etikettiervorrichtung oder eine Druckvorrichtung sein.

Gemäß einer besonders bevorzugten Ausgestaltung weist die Behandlungseinrichtung oder zumindest eine der Behandlungseinrichtungen eine oder mehrere Fluidzuführungen auf, wobei jeweils einer Behälteraufnahme eine Fluidzuführung zugeordnet ist. Diese Fluidzuführung ist dann entsprechend gegenüber der zugeordneten Behälteraufnahme stationär eingerichtet, sodass diese zusammen mit der Behälteraufnahme in der Behandlungsebene rotiert. Gemäß einer solchen Ausgestaltung wird also deutlich, dass die Behandlungseinrichtung dazu eingerichtet ist, ein Fluid, z. B. ein Gas oder eine Flüssigkeit, in die Behälter einzubringen. Gemäß einer solchen Ausgestaltung ist die zumindest eine Behandlungseinrichtung ausgewählt aus der Gruppe Füllvorrichtung, Sterilisiervorrichtung, Ausblasvorrichtung und Spülvorrichtung.

Mit einer Füllvorrichtung ist im Rahmen der Erfindung eine Vorrichtung gemeint, mit der die Behälter dauerhaft mit einem Fluid, insbesondere einem Getränk, befüllt werden. Bei diesem Getränk kann es sich beispielsweise um Wasser, Mischgetränke, Bier, Saft oder dergleichen handeln. Darüber hinaus ist auch das Einbringen von karbonisierten Getränken möglich. Hiervon zu unterscheiden ist eine Spülvorrichtung, bei der lediglich zur Reinigung der Behälter ein Reinigungsmedium, insbesondere Spülwasser, in den Behälter eingebracht und sodann wieder abgezogen wird. Ein solcher Vorgang wird im Allgemeinen auch als Rinsen bezeichnet. In einer Sterilisiervorrichtung wird ein Sterilisationsmedium in die Behälter eingebracht, um die Behälter vor dem Einbringen eines Füllmediums keimfrei zu machen. Als Sterilisationsmedium kann beispielsweise Wasserstoffperoxid (H₂O₂), Chlordioxid oder Peeressigsäure verwendet werden. Dieses Sterilisationsmedium bleibt dann für einen entsprechenden Zeitraum in dem Behälter, wobei dieser Zeitraum danach bemessen ist, dass eine ausreichend hohe Anzahl von Keimen und Bakterien abgetötet werden kann. Sodann werden die Behälter üblicherweise einer Ausblasvorrichtung zugeführt, um die Rückstände des Sterilisationsmediums entfernen zu können.

Gerade wenn die Behandlungsanordnung dazu vorgesehen ist, die Behälter zu sterilisieren, kann beispielsweise eine erste Behandlungsebene eine Sterilisationsvorrichtung und eine dritte Behandlungsebene eine Ausblasvorrichtung aufweisen, während in der zweiten zwischen der ersten und dritten Behandlungsebene angeordneten Behandlungsebene keine unmittelbare Behandlung erfolgt. Vielmehr kann das Sterilisationsmedium während des Transports im zweiten Abschnitt der Transportstrecke einwirken und erst dann im dritten Abschnitt der Transportstrecke aus dem Behälter entfernt werden.

Sofern die Behandlungsanlage ausschließlich als Füllanlage ausgebildet ist, kann in allen Behandlungsebenen eine entsprechende Füllvorrichtung vorgesehen sein. Gemäß einer solchen Ausgestaltung kann dann entweder in allen Füllvorrichtungen dasselbe Fluid eingefüllt werden, wodurch beispielsweise ein sehr hoher Durchsatz ermöglicht wird. Alternativ ist es auch denkbar in einzelnen Behandlungsebenen unterschiedliche Fluide einzufüllen. Hierdurch ist es möglich auch Mischgetränke innerhalb der Füllvorrichtung herzustellen. Beispielsweise kann in der ersten Behandlungsebene ein Saft oder Sirup eingefüllt werden, während in der zweiten Behandlungsebene über die zweite Füllvorrichtung der Behälter mit Wasser aufgefüllt wird. Auch Kombinationen aus Softdrink und Bier sind möglich sowie anderweitige Arten von Mischgetränken. Bei einer großen Anzahl von Behandlungsebenen können darüber hinaus auch sämtliche erforderliche Behandlungen miteinander kombiniert werden, sodass dann innerhalb einer Behandlungsanlage in nur einem Behandlungskarussell das Reinigen, Sterilisieren und Befüllen der Behälter erfolgen kann.

Eine besonders bevorzugte Ausgestaltung sieht vor, dass die Behandlung der Behälter ausschließlich in den Behandlungsebenen des Behandlungskarussells und nicht in der Transfereinrichtung erfolgt. Dementsprechend ist die Transfereinrichtung nicht dazu eingerichtet, die Behälter zu behandeln.

Gegenstand der Erfindung ist ferner ein Verfahren zum Behandeln von Behältern gemäß Patentanspruch 16, wobei in der zuvor beschriebenen, erfindungsgemäßen Behandlungsanlage zunächst Behälter einer ersten Behandlungsebene des Behandlungskarussells zugeführt und entlang des ersten Abschnitts der Transportstrecke bewegt werden, wobei die Behälter anschließend in der Transfereinrichtung von der ersten Behandlungsebene in eine zweite Behandlungsebene des Behandlungskarussells überführt und in der zweiten Behandlungsebene entlang eines zweiten Abschnitts der Transportstrecke bewegt werden und wobei in zumindest einer der Behandlungsebenen eine Behandlung der Behälter erfolgt.

Die grundsätzliche Ausgestaltung der Behandlungsanlage wurde bereits zuvor eingehend erläutert. Dies gilt auch für die Art und Weise, wie die Behälter im Rahmen des erfindungsgemäßen Verfahrens behandelt werden können.

Demnach bilden die zumindest zwei Behandlungsebenen eine gemeinsame Transportstrecke, welche von allen Behältern durchlaufen wird. Entsprechend sind die zumindest zwei Behandlungsebenen in Serie geschaltet, wobei die Transfereinrichtung dazu vorgesehen ist, die Abschnitte der Transportstrecke über einen entsprechenden Transferabschnitt miteinander zu verbinden.

Die Behandlung der Behälter erfolgt bevorzugt ausschließlich in den einzelnen Behandlungsebenen, wobei hierfür maximal die Länge der Abschnitte der Transportstrecke zur Verfügung steht. Die Behandlungsabschnitte, in denen tatsächlich eine Behandlung der Behälter erfolgt, kann aber auch kleiner ausgebildet sein als der zur Verfügung stehende Abschnitt der Transportstrecke. Grundsätzlich ist man aber in der Praxis bestrebt, den zur Verfügung stehenden Raum möglichst effektiv auszunutzen, wobei gerade durch die vertikale Anordnung der einzelnen Behandlungsebenen eine große Transportstrecke gebildet werden kann, ohne dass die Behandlungsanlage sich über einen großen Bauraum erstreckt.

Gemäß einer bevorzugten Ausgestaltung des Verfahrens werden die Behälter anschließend über die Transfereinrichtung von der zweiten Behandlungsebene in eine dritte Behandlungsebene und in der dritten Behandlungsebene entlang eines dritten Abschnitts der Transportstrecke bewegt. Somit stehen zumindest drei Behandlungsebenen zur Verfügung, in denen die Behälter in ausgewählter Art und Weise behandelt werden können. Grundsätzlich ist das Verfahren hierauf allerdings nicht beschränkt. Es ist auch denkbar, dass ausgehend von der dritten Behandlungsebene eine Überführung in eine vierte, fünfte oder mehr Behandlungsebenen erfolgt, wobei die einzelnen Behandlungsebnen stets in vertikaler Richtung übereinander angeordnet sind.

Gemäß einer besonders bevorzugten Ausgestaltung werden die Behälter in den Behandlungsebenen in unterschiedlicher Art und Weise behandelt. Die Behandlung kann hierbei ein Befüllen, Sterilisieren, Ausblasen oder Spülen der Behälter umfassen. Darüber hinaus ist es auch denkbar, dass die Behälter in zumindest einer der Behandlungsebenen etikettiert oder bedruckt werden, wodurch das äußerliche Erscheinungsbild der Behälter beeinflusst wird.

Eine Weiterbildung der Erfindung sieht ferner vor, dass die Behälter zum Überführen zwischen den Behandlungsebenen und der Transfereinrichtung bezüglich des Behandlungskarussells in radialer Richtung verschoben werden. Besonders deutlich wird diese Ausgestaltung anhand der zweiten Ausgestaltungsform der erfindungsgemäßen Behandlungsanlage, wobei die Hubelemente die einzelnen Behandlungsebenen umfangseitig umschließen. Durch die radiale Bewegung, welche z. B. durch ein Abstreifelement bewirkt wird, verschieben sich die Behälter radial nach außen in die Hubelemente und werden sodann in vertikaler Richtung bewegt. Nach Erreichen der nächsten Behandlungsebene erfolgt eine Bewegung radial nach innen in die nächste Behandlungsebene. Auch bei der ersten Ausgestaltungsform werden die Behälter aus dem Behandlungskarussell radial nach außen in das Transferkarussell bewegt und im Anschluss daran z. B. über ein zweites Transferkarussell erneut durch eine radial nach innen gerichtete Bewegung in das Behandlungskarussell zurückgeführt.

Eine bevorzugte Ausgestaltung sieht darüber hinaus vor, dass die Behälter als Getränkeflaschen ausgebildet sind und an ihrem Neckring von den Behälteraufnahmen des Behandlungskarussells und/oder von den Transportaufnahmen der Hubelemente gehalten werden. Gemäß einer solchen Ausgestaltung sind die Behälteraufnahmen und/oder die Transportelemente mit einem sogenannten Neckring-Halter ausgebildet, in dem die Flaschen hängend angeordnet werden.

Im Folgenden wird die Erfindung anhand von Ausführungsbeispielen näher erläutert. Die Figuren zeigen:
- Fig. 1: eine erfindungsgemäße Behandlungsanlage gemäß einer ersten Ausgestaltungsform in einer Draufsicht,
- Fig. 2, 3: die Behandlungsanlage gemäß Fig. 1 in unterschiedlichen isometrischen Ansichten,
- Fig. 4: eine erfindungsgemäße Behandlungsanlage gemäß einer zweiten Ausgestaltungsform in einer Draufsicht,
- Fig. 5: die Behandlungsanlage gemäß Fig. 4 in einer isometrischen Ansicht,
- Fig. 6: eine Detailansicht der Behälteraufnahmen und der Hubelemente.

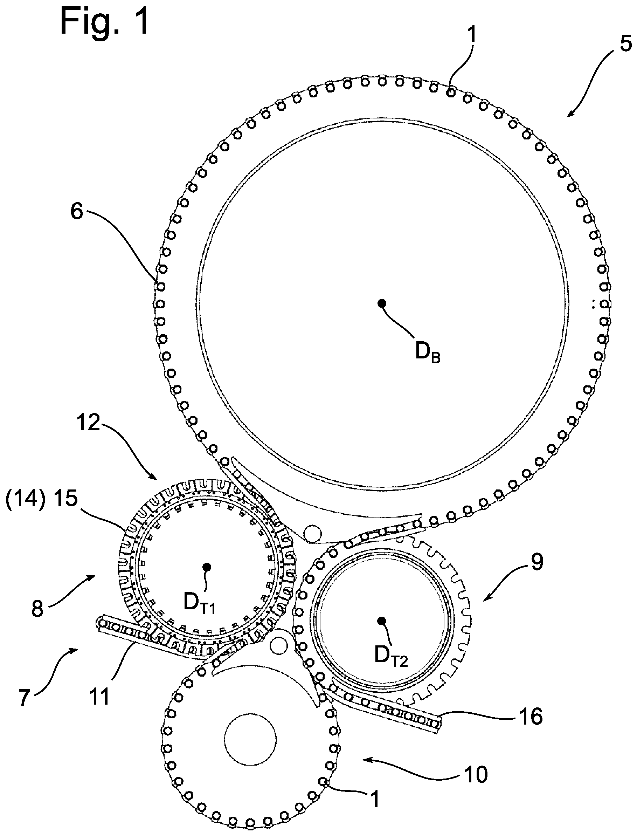

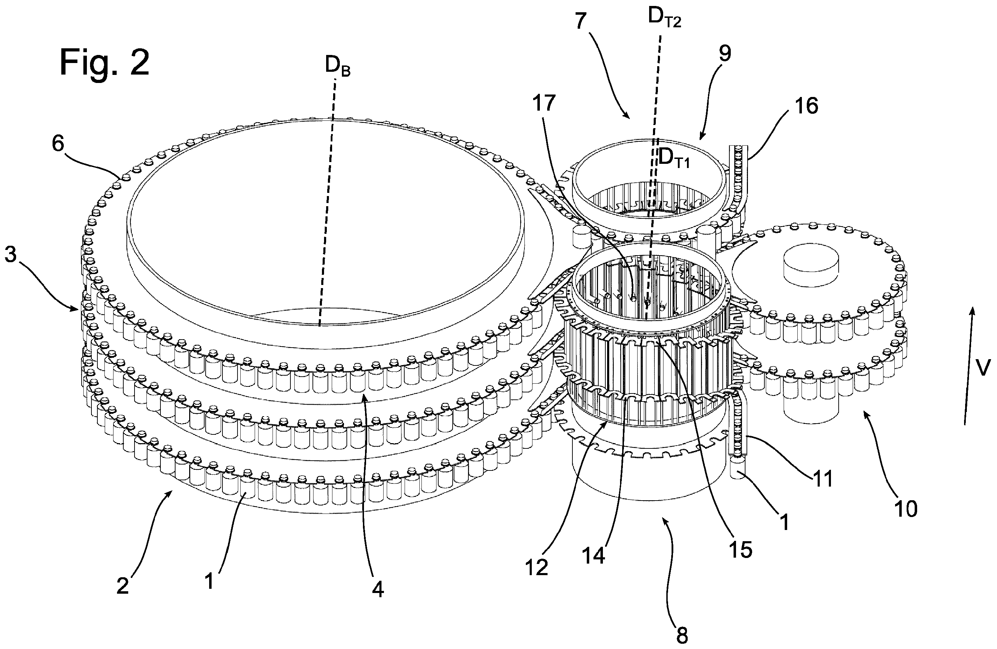

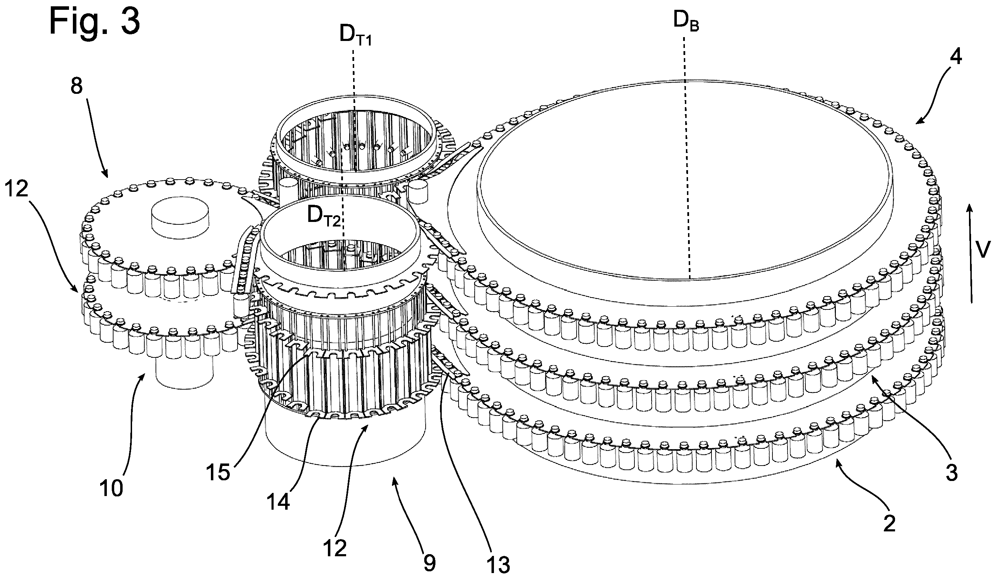

Die Fig. 1, 2 und 3 zeigen eine erfindungsgemäße Behandlungsanlage zum Behandeln von Behältern 1 in unterschiedlichen Ansichten, wobei die genaue Funktion der Behandlungsanlage aus einer vergleichenden Ansicht der Figuren hervorgeht.

Die Behandlungsanlage weist ein Behandlungskarussell 5 mit insgesamt drei übereinander angeordneten Behandlungsebenen 2, 3, 4 auf, wobei das Behandlungskarussell 5 und damit auch die Behandlungsebenen 2, 3, 4 entlang einer Drehachse D_{B} rotieren. Die Behandlungsebenen 2, 3, 4 sind hierbei fest zueinander angeordnet und weisen Behälteraufnahmen 6 auf, welche in einer Draufsicht fluchtend zueinander angeordnet sind.

Die Behälteraufnahmen 6 sind darüber hinaus in Umfangsrichtung hintereinander angeordnet. Damit die Behälter 1 zwischen den einzelnen Behandlungsebenen 2, 3, 4 bewegt werden können ist daher eine Transfereinrichtung 7 vorgesehen, welche in dem aufgeführten Beispiel gemäß der ersten Ausgestaltungsform aus zwei Transferkarussellen 8, 9 und einem zwischengeschalteten Transportstern 10 gebildet ist. Die Transferkarusselle 8, 9 weisen hierbei Drehachsen D_{T1}, D_{T2} auf, welche parallel zu der Drehachse D_{B} des Behandlungskarussells 5 angeordnet sind.

Für die Behandlung in dem Behandlungskarussell 5 werden die Behälter 1 über eine an dem ersten Transferkarussell 8 angeordnete Behälterzuführung 11 der ersten Behandlungsebene 2 zugeführt und sodann entlang einem ersten Abschnitt einer Transportstrecke in der ersten Behandlungsebene 2 durch Rotieren des Behandlungskarussells 5 bewegt. Im Anschluss werden die Behälter 1 sodann Hubelementen 12 des zweiten Transferkarussells 9 zugeführt und im Zuge einer Rotation des zweiten Transferkarussells 9 in eine vertikale, parallel zur Drehachse D_{T2} verlaufende Richtung bewegt. Das Einführen in die Hubelemente erfolgt hierbei durch Abstreifelemente 13, welche die Behälter 1 radial nach außen bewegen.

Sodann werden die Behälter in den Transportstern 10 und anschließend in die Hubelemente 12 des ersten Behandlungskarussells 8 eingeführt. Auch dort werden die Behälter durch Bewegung der Hubelemente 12 in die vertikale Richtung V bewegt und erreichen am Ende die Höhe der zweiten Behandlungsebene 3. Innerhalb der zweiten Behandlungsebene 3 können die Behälter 1 entlang eines zweiten Abschnittes der Transportstrecke rotieren und im Zuge dessen behandelt werden. Im Anschluss daran werden die Behälter 1 erneut der Transfervorrichtung 7 zugeführt und über die Hubelemente 12 der dritten Behandlungsebene 4 zugeführt. Entscheidend ist hierbei, dass die Hubelemente 12 jeweils zwei übereinander angeordnete Transportaufnahmen 14, 15 aufweisen, sodass parallel jeweils ein Behälter 1 zwischen der ersten und der zweiten Behandlungsebene 2, 3 und zwischen der zweiten und der dritten Behandlungsebene 3, 4 bewegt werden können.

Nach Durchlaufen des dritten Abschnittes der Transportstrecke in der dritten Behandlungsebene 4 werden die Behälter 1 über einen am ersten Transferkarussell 7 gebildeten Behälterauslauf 16 aus der Behandlungsanlage abgeführt.

Den Hubelementen 12 ist für die Hubbewegung eine Hubeinrichtung in Form einer Kurvensteuerung zugeordnet, wobei die Hubelemente 12 hierzu Führungsrollen 17 aufweisen, welche an nicht näher dargestellten Führungskurven abrollen. Hierdurch wird sichergestellt, dass die Hubbewegung und die Rotation der Hubelemente 12 im jeweiligen Transferkarussell 8, 9 synchronisiert erfolgen können.

Darüber hinaus kann - wie bereits zuvor erläutert - eine Behandlung in den einzelnen Behandlungsebenen 2, 3, 4 des Behandlungskarussell 5 erfolgen, wobei in den Fig. 1, 2, 3 keine Behandlungseinrichtungen näher dargestellt ist. Besonders bevorzugt sind in diesem Zusammenhang Behandlungseinrichtungen, welche das Einbringen eines Fluids in die Behälter 1 ermöglichen. Entsprechend ist dann den einzelnen Behälteraufnahmen 6 jeweils eine Fluidleitung zugeordnet, über die das entsprechende Fluid in die Behälter 1 eingebracht werden kann. Entsprechend handelt es sich bevorzugt bei den Behandlungseinrichtungen um Füllvorrichtungen, Spülvorrichtungen, Sterilisiervorrichtungen und/oder Ausblasvorrichtungen.

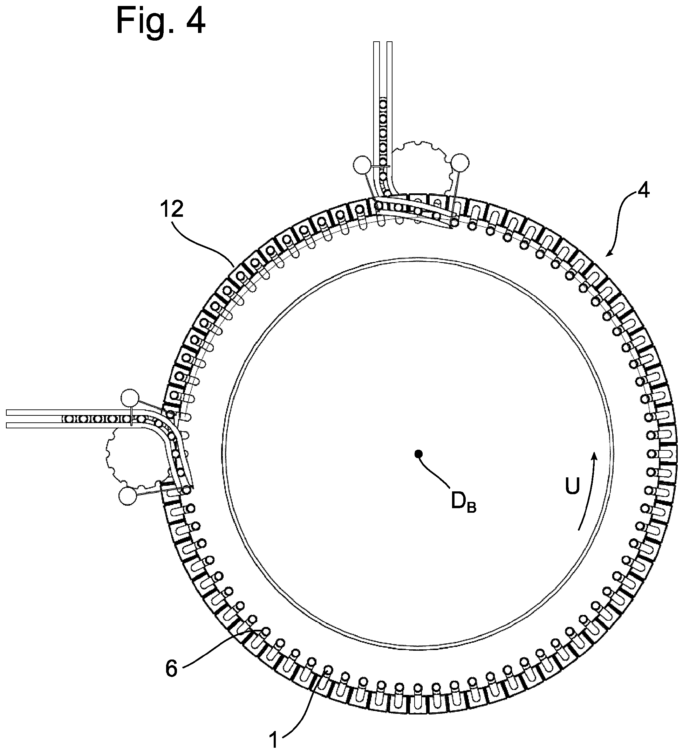

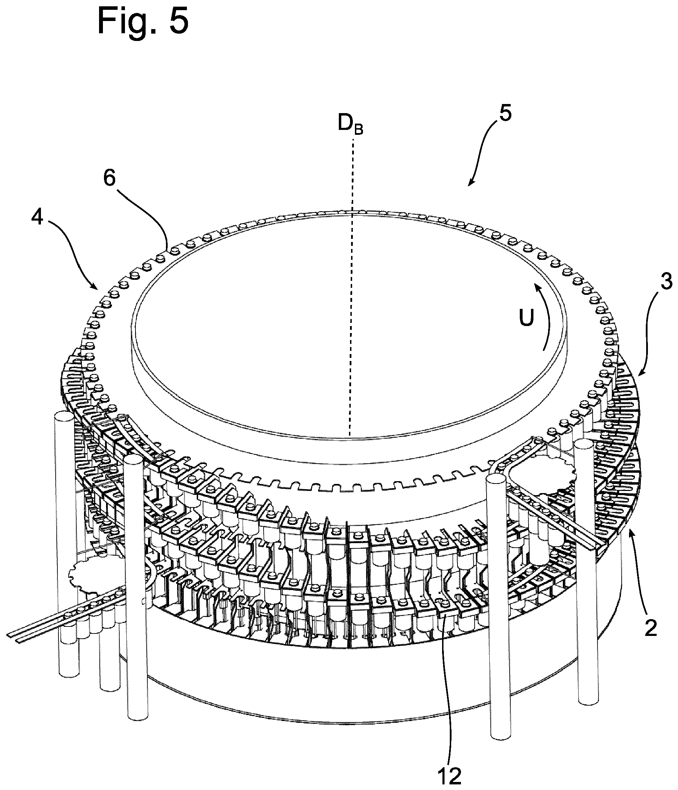

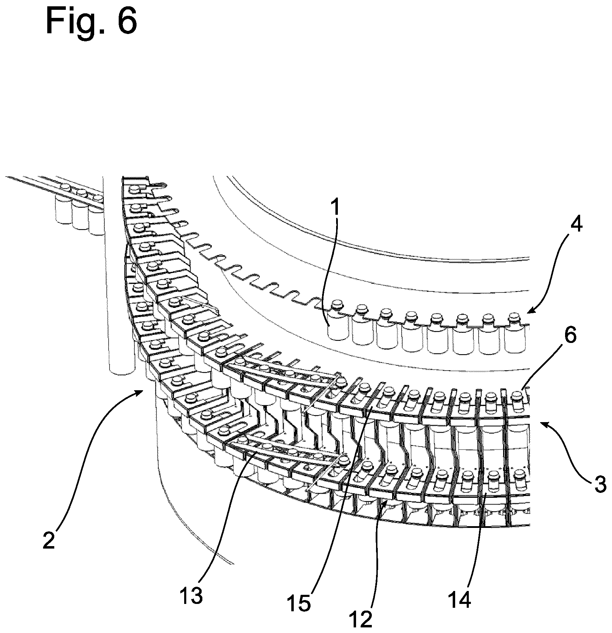

Die Fig. 4, 5, 6 zeigen eine alternative, zweite Ausgestaltungsform, wobei auch hier insgesamt drei Behandlungsebenen 2, 3, 4 an dem Behandlungskarussell 5 vorgesehen sind.

Im Unterschied zu den Fig. 1, 2, 3 sind jedoch die Hubelemente 12 in Umfangsrichtung U um die Behälteraufnahmen 6 herum mit zwei übereinander angeordneten Transportaufnahmen 14, 15 angeordnet, wobei jeweils ein Hubelement 12 jeweils einer Behälteraufnahme 6 aus jeder Behandlungsebene 2, 3, 4 zugeordnet ist. Hierbei ermöglicht die untere Transportaufnahme 14 eine Bewegung der Behälter 1 zwischen der ersten und der zweiten Behandlungsebene 2, 3 und die zweite Transportaufnahme 15 eine Bewegung der Behälter 1 zwischen der zweiten und dritten Behandlungsebene 3, 4.

Die Behälter 1 werden sodann über das Abstreifelement 13 radial nach außen von der Behälteraufnahme 6 in das Hubelement 12 und sodann das Hubelement 12 über eine kurvengesteuerte Hubeinrichtung in Richtung der zweiten Behandlungsebene 3 geführt. Nach Erreichen der zweiten Behandlungsebene 3 wird der jeweilige Behälter 1 radial nach innen in die Behälteraufnahmen 6 der zweiten Behandlungsebene 3 geführt und kann dann entlang des zweiten Abschnitts der Transportstrecke in der zweiten Behandlungsebene 2 rotieren. Im Anschluss erfolgt dann in analoger Weise das Einbringen in die dritten Behandlungsebene 4.

### Bezugszeichenliste

- 1: Behälter
- 2: erste Behandlungsebene
- 3: zweite Behandlungsebene
- 4: dritte Behandlungsebene
- 5: Behandlungskarussell
- 6: Behälteraufnahme
- 7: Transfereinrichtung
- 8: erstes Transferkarussell
- 9: zweites Transferkarussell
- 10: Transportstern
- 11: Behälterzuführung
- 12: Hubelement
- 13: Abstreifelement
- 14: Transportaufnahme
- 15: Transportaufnahme
- 16: Behälterauslauf
- 17: Führungsrolle
- D_{B}: Drehachse Behandlungskarussell
- D_{T1}: Drehachse erstes Transferkarussell
- D_{T2}: Drehachse zweites Transferkarussell
- V: vertikale Richtung

## Patentansprüche

1. Behandlungsanlage zum Behandeln von Behältern (1) mit einem zumindest zwei übereinander liegende Behandlungsebenen (2, 3, 4) aufweisenden Behandlungskarussell (5), wobei jede der Behandlungsebenen (2, 3, 4) eine Vielzahl von in Umfangsrichtung hintereinander angeordneten Behälteraufnahmen (6) aufweist und zumindest in einer der Behandlungsebenen (2, 3, 4) eine Behandlungseinrichtung zum Behandeln der Behälter (1) in einem Behandlungsabschnitt angeordnet ist, wobei eine Transfereinrichtung (7) mit einer Vielzahl von Hubelementen (12) zum Transport der Behälter (1) zwischen den zumindest zwei Behandlungsebenen (2, 3, 4) vorgesehen ist,
**dadurch gekennzeichnet, dass** in einer Übergabestellung die Hubelemente (12) jeweils unmittelbar an eine der Behälteraufnahmen (6) angrenzen.

2. Behandlungsanlage nach Anspruch 1, **dadurch gekennzeichnet, dass** die Transfereinrichtung (7) zumindest ein Transferkarussell (8, 9) aufweist und zumindest ein Teil der Hubelemente (12) an dem Transferkarussell (8, 9) angeordnet ist, wobei das Transferkarussell (8, 9) und das Behandlungskarussell (5) nebeneinander mit parallel zueinander versetzten Drehachsen (D_{B}, D_{T1}, D_{T2}) angeordnet sind.

3. Behandlungsanlage nach Anspruch 2, **dadurch gekennzeichnet, dass** die Transfereinrichtung (7) zumindest zwei Transferkarusselle (8, 9) aufweist und die Hubelemente (12) an den Transferkarussellen (8, 9) angeordnet sind, wobei die Hubelemente (12) in einer Übergabestellung an unterschiedliche Behandlungsebenen (2, 3, 4) des Behandlungskarussells (5) angrenzen.

4. Behandlungsanlage nach Anspruch 3, **dadurch gekennzeichnet, dass** ein gemeinsamer Transportstern (10) vorgesehen ist, an den die Transferkarusselle (8, 9) angrenzen.

5. Behandlungsanlage nach Anspruch 1, **dadurch gekennzeichnet, dass** die Hubelemente (12) an dem Behandlungskarussell (5) in Umfangsrichtung angeordnet sind.

6. Behandlungsanlage nach Anspruch 5, **dadurch gekennzeichnet, dass** jeweils ein Hubelement (12) einer Behälteraufnahme (6) einer ersten und zumindest einer zweiten Behandlungsebene (4, 5) zugeordnet ist.

7. Behandlungsanlage nach Anspruch 6, **dadurch gekennzeichnet, dass** Abstreifelemente (13) zur Überführung der Behälter (1) zwischen den Hubelementen (12) und den Behälteraufnahmen (6) vorgesehen sind.

8. Behandlungsanlage nach einem der vorangegangenen Ansprüche, **dadurch gekennzeichnet, dass** die Transfereinrichtung (7) eine Hubeinrichtung aufweist, welche dazu eingerichtet ist, die Hubelemente (12) zu bewegen.

9. Behandlungsanlage nach Anspruch 8, **dadurch gekennzeichnet, dass** die Hubeinrichtung eine Kurvensteuerung aufweist.

10. Behandlungsanlage nach einem der vorangegangenen Ansprüche, dass das Behandlungskarussell (5) zumindest drei übereinander liegende Behandlungsebenen (2, 3, 4) aufweist, wobei die Transfereinrichtung (7) dazu eingerichtet ist, die Behälter (1) zwischen einer ersten und einer zweiten Behandlungsebene (2, 3) und zwischen der zweiten und einer dritten Behandlungsebene (3, 4) zu bewegen.

11. Behandlungsanlage nach Anspruch 10, **dadurch gekennzeichnet, dass** die Hubelemente (12) jeweils zumindest zwei übereinanderliegende Transportaufnahmen (14, 15) für die Behälter (1) aufweisen.

12. Behandlungsanlage nach einem der vorangegangenen Ansprüche, **dadurch gekennzeichnet, dass** in mehreren der Behandlungsebenen (2, 3, 4), insbesondere in jeder der Behandlungsebenen (2, 3, 4), eine Behandlungseinrichtung zum Behandeln der Behälter (1) in jeweils einem Behandlungsabschnitt angeordnet ist.

13. Behandlungsanlage nach Anspruch 12, **dadurch gekennzeichnet, dass** sich zumindest zwei der Behandlungseinrichtungen in der Art der Behandlung voneinander unterscheiden.

14. Behandlungsanlage nach Anspruch 12 oder 13, **dadurch gekennzeichnet, dass** zumindest zwei der Behandlungseinrichtungen zur Durchführung der gleichen Art von Behandlung eingerichtet sind.

15. Behandlungsanlage nach einem der Ansprüche 1 bis 14, **dadurch gekennzeichnet, dass** die Behandlungseinrichtung oder zumindest eine der mehreren Behandlungseinrichtungen eine Vielzahl von Fluidzuführungen aufweist, wobei jeweils einer Behälteraufnahme (6) eine Fluidzuführung zugeordnet ist.

16. Verfahren zum Behandeln von Behältern (1) in einer Behandlungsanlage nach einem der vorangegangenen Ansprüche, wobei die Behälter (1) einer ersten Behandlungsebene (2) des Behandlungskarussells (5) zugeführt und entlang eines ersten Abschnitts einer Transportstrecke bewegt werden, wobei die Behälter (1) anschließend in der Transfereinrichtung (7) von der ersten Behandlungsebene (2) in eine zweite Behandlungsebene (3) des Behandlungskarussells (5) überführt und in der zweiten Behandlungsebene (3) entlang eines zweiten Abschnitts der Transportstrecke bewegt werden und wobei in zumindest einer der Behandlungsebenen (2, 3) eine Behandlung der Behälter (1) erfolgt.

17. Verfahren nach Anspruch 16, wobei die Behälter (1) anschließend über die Transfereinrichtung (7) von der zweiten Behandlungsebene (3) in eine dritte Behandlungsebene (4) und in der dritten Behandlungsebene (4) entlang eines dritten Abschnitts der Transportstrecke bewegt werden.

18. Verfahren nach Anspruch 16 oder 17, wobei die Behälter (1) in den Behandlungsebenen (2, 3, 4) in unterschiedlicher Art und Weise behandelt werden.

19. Verfahren nach einem der Ansprüche 16 bis 18, wobei die Behälter (1) zum Überführen zwischen den Behandlungsebenen (2, 3, 4) und der Transfereinrichtung (7) in radialer Richtung verschoben werden.

20. Verfahren nach einem der Ansprüche 16 bis 19, wobei die Behälter (1) als Getränkeflaschen ausgebildet sind und an ihrem Neckring von den Behälteraufnahmen (6) des Behandlungskarussells (5) und/oder von den Transportaufnahmen (14) der Hubelemente (12) gehalten werden.

## Claims

1. Treatment plant for treating containers (1) with a treatment carousel (5) having at least two superimposed treatment levels (2, 3, 4), wherein each of the treatment levels (2, 3, 4) has a plurality of container holders (6) arranged one behind the other in the circumferential direction and at least in one of the treatment levels (2, 3, 4) a treatment device for treating the containers (1) is arranged in a treatment section, wherein a transfer device (7) is provided with a plurality of lifting elements (12) to transport the containers (1) between the at least two treatment levels (2, 3, 4), **characterised in that** in a handover position the lifting elements (12) are each directly adjacent to one of the container holders (6).

2. Treatment plant according to claim 1 **characterised in that** the transfer device (7) has at least one transfer carousel (8, 9) and at least a portion of the lifting elements (12) are arranged on the transfer carousel (8, 9), wherein the transfer carousel (8, 9) and the treatment carousel (5) are arranged next to each other with rotational axes (D_{B} D_{T1} D_{T2}) offset parallel to each other.

3. Treatment plant according to claim 2 **characterised in that** the transfer device (7) has at least two transfer carousels (8, 9) and the lifting elements (12) are arranged on the transfer carousels (8, 9), wherein in a handover position the lifting elements (12) are adjacent to different treatment levels (2, 3, 4) of the treatment carousel (5).

4. Treatment plant according to claim 3, **characterised in that** a common transport star (10) is provided, adjacent to which are the transfer carousels (8, 9).

5. Treatment plant according to claim 1, **characterised in that** the lifting elements (12) are arranged in a circumferential direction on the treatment carousel (5).

6. Treatment plant according to claim 5, **characterised in that** in each case one lifting element (12) of a container holder (6) is allocated to a first and at least a second treatment level (4, 5).

7. Treatment plant according to claim 6, **characterised in that** stripping elements (13) are provided to transfer the containers (1) between the lifting elements (12) and the container holders (6).

8. Treatment plant according to one of the previous claims, **characterised in that** the transfer device (7) has a lifting device, which is set up to move the lifting elements (12).

9. Treatment plant according to claim 8, **characterised in that** the lifting device has a cam control system.

10. Treatment plant according to one of the previous claims, **characterised in that** the treatment carousel (5) has at least three superimposed treatment levels (2, 3, 4), wherein the transfer device (7) is set up to move the containers (1) between a first and a second treatment level (2, 3) and between the second and a third treatment level (3, 4).

11. Treatment plant according to claim 10, **characterised in that** the lifting elements (12) each have at least two superimposed transport holders (14, 15) for the containers (1).

12. Transport plant according to one of the previous claims, **characterised in that** in a plurality of the treatment levels (2, 3, 4), in particular in each of the treatment levels (2, 3, 4), one treatment device for treating containers (1) is arranged in each case in one treatment section.

13. Treatment plant according to claim 12, **characterised in that** at least two of the treatment devices differ from each other in terms of type of treatment.

14. Treatment plant according to claim 12 or 13, **characterised in that** at least two of the treatment devices are set up to carry out the same type of treatment.

15. Treatment plant according to at one of the claims 1 to 14, **characterised in that** the treatment device or at least one of the plurality of treatment devices has a plurality of fluid feeds, wherein a fluid feed is allocated in each case to a container holder (6).

16. Method for treating containers (1) in a treatment plant according to one of the previous claims, wherein the containers (1) are supplied to a first treatment level (2) of the treatment carousel (5) and moved along a first section of a transport path, wherein the containers (1) are then transferred in the transfer device (7) from the first treatment level (2) to a second treatment level (3) of the treatment carousel (5) and in the second treatment level (3) moved along a second section of the transport path and wherein in at least one of the treatment levels (2, 3) a treatment of the containers (1) occurs.

17. Method according to claim 16, wherein the containers (1) are then moved over the transfer device (7) from the second treatment level (3) to a third treatment level (4) and in the third treatment level (4) along a third section of the transport path.

18. Method according to claim 16 or 17, wherein the containers (1) in the treatment levels (2, 3, 4) are treated in a different manner and way.

19. Method according to one of claims 16 to 18, wherein the containers (1) are pushed in a radial direction for transfer between the treatment levels (2, 3, 4) and the transfer device (7).

20. Method according to one of claims 16 to 19, wherein the containers (1) are configured as drinks bottles and are held on their neck ring by the container holders (6) of the treatment carousel (5) and/or by the transport holders (14) of the lifting elements (12).

## Revendications

1. Installation de traitement de contenants (1) avec un carrousel de traitement (5) présentant au moins deux niveaux de traitement (2, 3, 4) superposés, dans laquelle chacun des niveaux de traitement (2, 3, 4) présente une pluralité de logements de contenant (6) disposés les uns après les autres dans la direction périphérique et un dispositif de traitement destiné à traiter les contenants (1) est disposé dans une section de traitement au moins dans l'un des niveaux de traitement (2, 3, 4), dans laquelle un dispositif de transfert (7) est prévu avec une pluralité d'éléments de levage (12) pour le transport des contenants (1) entre les au moins deux niveaux de traitement (2, 3, 4),
**caractérisée en ce que** les éléments de levage (12) sont respectivement adjacents directement à l'un des logements de contenant (6) dans une position de transfert.

2. Installation de traitement selon la revendication 1, **caractérisée en ce que** le dispositif de transfert (7) présente au moins un carrousel de transfert (8, 9) et au moins une partie des éléments de levage (12) est disposée sur le carrousel de transfert (8, 9), dans laquelle le carrousel de transfert (8, 9) et le carrousel de traitement (5) sont disposés côte à côte avec des axes de rotation (D_{B}, D_{T1}, D _{T2}) décalés parallèlement les uns par rapport aux autres.

3. Installation de traitement selon la revendication 2, **caractérisée en ce que** le dispositif de transfert (7) présente au moins deux carrousels de transfert (8, 9) et les éléments de levage (12) sont disposés sur les carrousels de transfert (8, 9), dans laquelle les éléments de levage (12) sont adjacents dans une position de transfert à différents niveaux de traitement (2, 3, 4) du carrousel de traitement (5).

4. Installation de traitement selon la revendication 3, **caractérisée en ce qu'**une étoile de transport commune (10) est prévue, à laquelle le carrousel de transfert (8, 9) est adjacent.

5. Installation de traitement selon la revendication 1, **caractérisée en ce que** les éléments de levage (12) sont disposés sur le carrousel de traitement (5) dans la direction périphérique.

6. Installation de traitement selon la revendication 5, **caractérisée en ce qu'**un élément de levage (12) d'un logement de contenant (6) est respectivement associé à un premier et au moins à un deuxième niveau de traitement (4, 5).

7. Installation de traitement selon la revendication 6, **caractérisée en ce que** des éléments racleurs (13) sont prévus pour le transfert des contenants (1) entre les éléments de levage (12) et les logements de contenant (6).

8. Installation de traitement selon l'une quelconque des revendications précédentes, **caractérisée en ce que** le dispositif de transfert (7) présente un dispositif de levage, qui est mis au point pour déplacer les éléments de levage (12).

9. Installation de traitement selon la revendication 8, **caractérisée en ce que** le dispositif de levage présente une commande à came.

10. Installation de traitement selon l'une quelconque des revendications précédentes, **caractérisée en ce que** le carrousel de traitement (5) présente au moins trois niveaux de traitement (2, 3, 4) superposés, dans laquelle le dispositif de transfert (7) est mis au point pour déplacer les contenants (1) entre un premier et un deuxième niveau de traitement (2, 3) et entre le deuxième et un troisième niveau de traitement (3, 4).

11. Installation de traitement selon la revendication 10, **caractérisée en ce que** les éléments de levage (12) présentent chacun au moins deux logements de transport (14, 15) superposés pour les contenants (1).

12. Installation de traitement selon l'une quelconque des revendications précédentes, **caractérisée en ce que**, dans plusieurs des niveaux de traitement (2, 3, 4), en particulier dans chacun des niveaux de traitement (2, 3, 4), un dispositif de traitement destiné à traiter les contenants (1) est disposé respectivement dans une section de traitement.

13. Installation de traitement selon la revendication 12, **caractérisée en ce qu'**au moins deux des dispositifs de traitement diffèrent l'une de l'autre dans le type de traitement.

14. Installation de traitement selon la revendication 12 ou 13, **caractérisée en ce qu'**au moins deux des dispositifs de traitement sont mis au point pour réaliser le même type de traitement.

15. Installation de traitement selon l'une quelconque des revendications 1 à 14, **caractérisée en ce que** le dispositif de traitement ou au moins l'un des plusieurs dispositifs de traitement présente une pluralité d'arrivées de fluide, dans laquelle une arrivée de fluide est associée respectivement à un logement de contenant (6).

16. Procédé de traitement de contenants (1) dans une installation de traitement selon l'une quelconque des revendications précédentes, dans lequel les contenants (1) sont amenés à un premier niveau de traitement (2) du carrousel de traitement (5) et sont déplacés le long d'une première section d'une ligne de transport, dans lequel les contenants (1) sont ensuite transférés dans le dispositif de transfert (7) du premier niveau de traitement (2) dans un deuxième niveau de traitement (3) du carrousel de traitement (5) et sont déplacés dans le deuxième niveau de traitement (3) le long d'une deuxième section de la ligne de transport et dans lequel un traitement des contenants (1) est effectué dans au moins l'un des niveaux de traitement (2, 3).

17. Procédé selon la revendication 16, dans lequel les contenants (1) sont ensuite déplacés par l'intermédiaire du dispositif de transfert (7) du deuxième niveau de traitement (3) dans un troisième niveau de traitement (4) et dans le troisième niveau de traitement (4) le long d'une troisième section de la ligne de transport.

18. Procédé selon la revendication 16 ou 17, dans lequel les contenants (1) sont traités de différentes manières dans les niveaux de traitement (2, 3, 4).

19. Procédé selon l'une quelconque des revendications 16 à 18, dans lequel les contenants (1) sont coulissés dans une direction radiale pour le transfert entre les niveaux de traitement (2, 3, 4) et le dispositif de transfert (7).

20. Procédé selon l'une quelconque des revendications 16 à 19, dans lequel les contenants (1) sont réalisés comme des bouteilles de boisson et sont maintenus sur leur anneau de col par les logements de contenant (6) du carrousel de traitement (5) et/ou par les logements de transport (14) des éléments de levage (12).
